# EUROPÄISCHE PATENTSCHRIFT

(11) **EP 1 165 302 B1**
(45) Veröffentlichungstag und Bekanntmachung des Hinweises auf die Patenterteilung: **12.02.2003**
(21) Anmeldenummer: 00914132.6
(22) Anmeldetag: 14.03.2000
(51) Int. Cl.: B29C 47/76, B29B 7/46, B29B 7/84, B29B 7/88, B29C 47/40

(54) **VORRICHTUNG UND VERFAHREN ZUM ENTGASEN VON KUNSTSTOFFEN, INSBESONDERE VON HOCHMOLEKULAREN POLYCARBONATLÖSUNGEN**
DEVICE AND METHOD FOR DEGASSING PLASTICS, ESPECIALLY POLYCARBONATE SOLUTIONS OF HIGH MOLECULAR WEIGHT
DISPOSITIF ET PROCEDE POUR DEGAZER DES MATIERES PLASTIQUES, NOTAMMENT DES SOLUTIONS DE POLYCARBONATE A HAUT POIDS MOLECULAIRE

(30) Priorität: 27.03.1999 DE 19914143
(43) Veröffentlichungstag der Anmeldung: 02.01.2002
(73) Patentinhaber: Bayer Aktiengesellschaft, 51368 Leverkusen (DE)
(72) Erfinder: ELSNER, Thomas, D-40593 Düsseldorf (DE); HEUSER, Jürgen, D-47803 Krefeld (DE); KORDS, Christian, D-47829 Krefeld (DE)
(86) Internationale Anmeldenummer: EP0002240
(87) Internationale Veröffentlichungsnummer: WO00058072

(56) Entgegenhaltungen:
- EP-A1- 0 665 095
- US-A- 5 728 337
- Patent Abstracts of Japan, Jahrgang 96, Nr. 12, 26 Dezember 1996 & JP 08 207118 A (JAPAN STEEL WORKS LTD) 13 August 1996.

## Beschreibung

Die Erfindung betrifft eine Vorrichtung und ein Verfahren zum Entgasen von Kunststoffen, insbesondere von hochmolekularen Polycarbonatlösungen, mit einem Doppelwellenextruder, der gleichsinnig drehende, miteinander kämmende Wellen aufweist.

Infolge des gestiegenen Umweltbewußtseins werden in der Kunststoffverarbeitung steigende Anforderungen bezüglich der Entfernung flüchtiger Komponenten aus Kunststoffen gestellt. Dies gilt insbesondere hinsichtlich des Einsatzes von Kunststoffen im Lebensmittelbereich. Die flüchtigen Komponenten dürfen im extrudierten Kunststoff meist nicht über 0,2 Gew.-% liegen und müssen zur Verbesserung der Produktqualität, insbesondere der optischen Eigenschaften, entzogen werden. Dies gilt insbesondere für Produkte aus hochmolekularen Polycarbonatlösungen mit Chlorbenzol und Methylenchlorid als flüchtigen Komponenten. Das Entfernen flüchtiger Komponenten aus Polymeren wird in der Kunststofnechnik als Entgasung bezeichnet. Zum Entgasen werden unterschiedliche Vorrichtungen verwendet, insbesondere Ein- und Zweischneckenextruder.

Bei der Entgasung mittels Ein- und Zweischneckenextrudern wird die Vorwärts- und Rückwärtsentgasung sowie die ein- und mehrfache Entgasung unterschieden. Bei der Vorwärtsentgasung ist die Entgasungsöffnung des Extruders in Förderrichtung der Schnecke hinter dem Einzug des Extruders angeordnet, während sie bei der Rückwärtsentgasung in Förderrichtung der Schnecke vor dem Einzug angeordnet ist. Auch werden Entgasungsextruder verwendet, bei denen sowohl eine Vorwärts- als auch eine Rückwärtsentgasung erfolgt. Je nach angestrebtem Restgehalt an flüchtigen Komponenten wird eine einstufige oder mehrstufige Entgasung durchgerührt. Die Anzahl der Entgasungsstufen kann allerdings nicht beliebig erhöht werden, da hierdurch die Kosten der Produktherstellung steigen und häufig auch die Produktqualität abnimmt. Die Produktqualität hängt dabei insbesondere von der Prozesstemperatur bzw. dem Temperaturanstieg sowie der Verweilzeit des zu entgasenden Kunststoffs innerhalb des Extruders ab. Dokument US 5 728 337 stellt den Stand der Technik, anhand dessen Anspruch 1 in die zweiteilige Form untertellt ist, dar.

Aufgabe der Erfindung ist es, eine Vorrichtung und ein Verfahren der eingangs genannten Art bereitzustellen, die zu einer wirtschaftlichen Verbesserung der Produktqualität führen, und zwar insbesondere die Herstellung von Polycarbonat mit besonders hoher Transmission ermöglichen.

Diese Aufgabe wird erfindungsgemäß dadurch gelöst, dass die Wellen des Extruders in der Entgasungszone zweigängig und in dessen Druckaufbauzone dreigängig ausgerührt sind und der Extruder ein L/D-Verhältnis kleiner/gleich 40 aufweist, wobei L für die jeweilige Schneckenlänge und D für den jeweiligen Schneckendurchmesser steht.

Herkömmliche Entgasungsextruder ermöglichen zum Beispiel bei hochmolekularen Polycarbonat-Typen Transmissionen von 87 bis 88. Demgegenüber lassen sich mit der erfindungsgemäßen Vorrichtung bzw. dem entsprechenden Verfahren für diese Polycarbonat-Typen überraschenderweise Transmissionen von 88,5 bis 89,5 erzielen.

Darüber hinaus können die Kosten der Produktherstellung reduziert werden, da der Extruder der erfindungsgemäßen Vorrichtung relativ kurz ausgeführt ist und sich damit der Platzbedarf und die Kosten der Vorrichtung entsprechend verringern.

Besonders hohe Trasmissionwerte wurden erzielt mit einem Doppelschneckenextruder, dessen L/D-Verhältnis im Bereich von 35 bis 40 liegt.

Zur Vermeidung temperaturbedingter Qualitätseinbußen ist es vorteilhaft, wenn der Extruder desweiteren eine eine Kühlzone definierende Kühleinrichtung aufweist. Auf diese Weise kann die Produktqualität positiv beeinflusst werden. Die Wellen des Extruders sind in der Kühlzone vorzugsweise dreigängig ausgeführt.

Nach einer anderen bevorzugten Ausgestaltung sind unmittelbar hinter der Einzugsöffnung des Extruders zwischen den Förderelementen der Wellen Knetelemente angeordnet. Die Knetelemente dienen dem Energieeintrag und insbesondere der Vergrößerung der Entgasungsoberfläche.

Eine hohe Entgasung lässt sich insbesondere erzielen, wenn gemäß einer weiteren Ausgestaltung der Extruder in Förderrichtung mehrere Entgasungszonen aufweist, an denen jeweils eine Absaugeinrichtung angeschlossen ist. Sehr gute Ergebnisse wurden mit einem Extruder erzielt, der hinter seiner Einzugsöffnung in Förderrichtung drei Entgasungszonen aufweist, wobei an der der ersten Entgasungszone zugeordneten Entgasungsöffnung ein Absolutdruck im Bereich von 0,5 bis 1,5 bar, an der der zweiten Entgasungszone zugeordneten Entgasungsöffnung ein Absolutdruck im Bereich von 0,03 bis 1,9 bar und an der der dritten Entgasungszone zugeordneten Entgasungsöffnung ein Absolutdruck im Bereich von 0,001 bis 0,03 bar erzeugt wurde.

Die Entgasung kann ferner mit einem die Entgasungsoberfläche vergrößernden Schleppmittel positiv beeinflusst werden. Bei dem erfindungsgemäßen Verfahren wird das Schleppmittel vorzugsweise in Förderrichtung zwischen einer zweiten und dritten Entgasungszone zugemischt. Als Schleppmittel kann vorzugsweise Stickstoff verwendet werden. Der zugeführte Stickstoffvolumenstrom sollte bei einer Wellendrehzahl kleiner/gleich 390 U/min vorzugsweise 2 bis 10 Nm³/h betragen.

Weitere bevorzugte und vorteilhafte Ausgestaltungen der Erfindung sind in den Unteransprüchen angegeben.

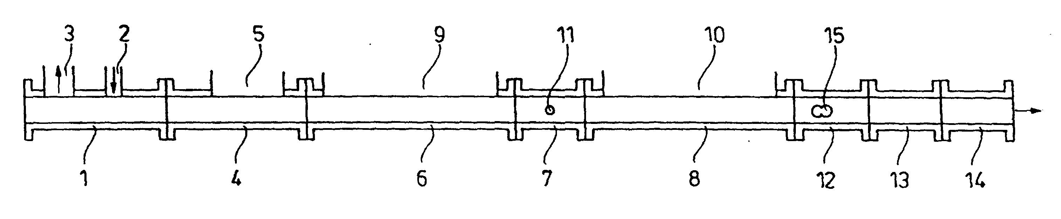

Nachfolgend wird die Erfindung anhand einer ein Ausführungsbeispiel darstellenden Zeichnung näher erläutert. Die einzige Figur zeigt eine schematische Längsschnittdarstellung eines Doppelwellenextruders einer erfindungsgemäßen Vorrichtung.

Der Doppelwellenextruder weist ein aus insgesamt acht Teilen zusammengesetztes Gehäuse auf, in welchem zwei gleichsinnig drehende, miteinander kämmende Wellen (nicht gezeigt) angeordnet sind. Der zu entgasende Kunststoff wird dem Extruder über die im ersten Gehäuseteil 1 ausgebildete Einzugsöffnung 2 zugeführt. In Förderrichtung vor der Einzugsöffnung 2 ist eine Entgasungsöffnung 3 (Rückwärtsentgasung) angeordnet. Die Antriebsenden der Wellen sind über eine Gleitringdichtung (nicht gezeigt) an der in der Figur linken Seite des ersten Gehäuseteils 2 nach außen geführt.

An das erste Gehäuseteil 1 schließt sich in Förderrichtung ein etwa gleichlanges zweites Gehäuseteil 4 an, das eine weitere Entgasungsöffnung 5 aufweist. Es folgt ein drittes, längeres Gehäuseteil 6, an das sich über ein viertes, relatives kurzes Gehäuseteil 7 ein fünftes Gehäuseteil 8 anschließt, dessen Länge derjenigen des dritten Gehäuseteils 6 entspricht. Das dritte und fünfte Gehäuseteil 6, 8 weisen jeweils gleichgroße Entgasungsöffnungen 9, 10 auf, die mehr als doppelt so lang wie die Entgasungsöffnung 5 des zweiten Gehäuseteils 4 sind. Die Entgasungsöffnungen 5, 9 und 10 sind an einer Absaugeinrichtung (nicht gezeigt) angeschlossen.

Das vierte Gehäuseteil 7 ist mit einem Anschluss 11 versehen, über den ein Schleppmittel, vorzugsweise Stickstoff, zugemischt werden kann.

Hinter dem fünften Gehäuseteil 8 folgen drei etwa gleichgroße Gehäuseteile 12, 13, 14, die eine Druckaufbauzone bilden, an deren Ende das entgaste Produkt aus dem Extruder austritt. Es ist zu erkennen, dass an dem sechsten Gehäuseteil 12 eine Anschlussöffnung 15 ausgebildet ist. Hieran kann ein Seitenextruder angeschlossen werden, über den dem entgasten Produkt Additive zugemischt werden können.

Im Bereich dieser Druckaufbauzone weisen die Wellen ein dreigängiges Profil auf.

Unmittelbar hinter der Einzugsöffnung 2 sind zwischen den Förderelementen der Wellen Knetelemente angeordnet. Im Bereich der Gehäuseteile 1, 4, 6, 7 und 8 sind die Wellen zweigängig ausgebildet. Die zweigängigen und dreigängigen Wellenprofile weisen dabei vorzugsweise unterschiedliche Steigungswinkel bzw. Steigungsrichtungen auf.

Die erfindungsgemäße Vorrichtung wird derart betrieben, dass an der ersten Entgasungsöfihung 3 ein Absolutdruck von 1 bis 2 bar, an der zweiten Entgasungsöffnung 5 ein Absolutdruck von 2,5 bis 1,5 bar, an der dritten Entgasungsöffnung 9 ein Absolutdruck von 0,03 bis 0,9 bar und an der vierten Entgasungsöffnung 10 ein Absolutdruck von 0,001 bis 0,03 bar herrscht.

Der Doppelwellenextruder arbeitet vorzugsweise mit einer Drehzahl kleiner/gleich 390 U/min. Der zugeführte Stickstoffvolumenstrom beträgt vorzugsweise 2 bis 10 Nm³/h.

Um temperaturbedingte Qualitätseinbußen zu verhindern, ist der Extruder mit einer Kühleinrichtung (nicht gezeigt) versehen. Die Kühleinrichtung ist vorzugsweise im Bereich der Gehäuseteile 12, 13, 14 ausgebildet.

Es hat sich gezeigt, dass mit einer derart konfigurierten Vorrichtung ein Polycarbonat mit besonders hoher Transmission herstellbar ist, nämlich Transmissionen von 88,5 bis 89,5 bei hochmolekularen (V-Zahl 1,33) Polycarbonat-Typen.

## Patentansprüche

1. Vorrichtung zum Entgasen von Kunststoffen, insbesondere von hochmolekularen Polycarbonatlösungen, mit einem Doppelwellenextruder, der gleichsinnig drehende, miteinander kämmende Wellen aufweist, **dadurch gekennzeichnet, dass** der Extruder ein Längen/Durchmesserverhältnis kleiner/gleich 40 aufweist, wobei die Wellen in der Entgasungszone des Extruders zweigängig und in dessen Druckaufbauzone dreigängig ausgeführt sind.

2. Vorrichtung nach Anspruch 1, **dadurch gekennzeichnet, dass** das Längen/-Durchmesserverhältnis im Bereich von 35 bis 40 liegt.

3. Vorrichtung nach Anspruch 1 oder 2, **dadurch gekennzeichnet, dass** der Extruder desweiteren eine eine Kühlzone definierende Kühleinrichtung aufweist.

4. Vorrichtung nach Anspruch 3, **dadurch gekennzeichnet, dass** die Wellen in der Kühlzone dreigängig ausgeführt sind.

5. Vorrichtung nach einem der vorstehenden Ansprüche, **dadurch gekennzeichnet, dass** unmittelbar hinter der Einzugsöffnung (2) des Extruders zwischen den Förderelementen der Wellen Knetelemente angeordnet sind.

6. Vorrichtung nach einem der vorstehenden Ansprüche, **dadurch gekennzeichnet, dass** der Extruder in Förderrichtung mehrere Entgasungszonen aufweist, an denen jeweils eine Absaugeinrichtung angeschlossen ist.

7. Vorrichtung nach einem der vorstehenden Ansprüche, **dadurch gekennzeichnet, dass** die Wellen im Bereich zwischen zwei Entgasungszonen ein dreigängiges Profil haben.

8. Vorrichtung nach einem der vorstehenden Ansprüche, **dadurch gekennzeichnet, dass** der Extruder einen zwischen zwei Entgasungszonen angeordneten Schleppmitteleintrag (11) aufweist.

9. Vorrichtung nach Anspruch 8, **dadurch gekennzeichnet, dass** der Extruder in Förderrichtung drei Entgasungszonen aufweist, wobei der Schleppmitteleintrag (11) zwischen der zweiten und der dritten Entgasungszone angeordnet ist.

10. Vorrichtung nach einem der vorstehenden Ansprüche, **dadurch gekennzeichnet, dass** vor der Einzugsöffnung (2) des Extruders eine einer Rückwärtsentgasung dienende Entgasungsöffnung (3) angeordnet ist.

11. Vorrichtung nach einem der vorstehenden Ansprüche, **dadurch gekennzeichnet, dass** hinter der in Förderrichtung letzten Entgasungszone eine Eintragseinrichtung (15) zur Zumischung von Additiven angeordnet ist.

12. Verfahren zum Entgasen von Kunststoffen, insbesondere von hochmolekularen Polycarbonatlösungen, mittels eines Doppelwellenextruders, der gleichsinnig drehende, miteinander kämmende Wellen aufweist, **dadurch gekennzeichnet, dass** die Wellen in der Entgäsungszone des Extruders zweigängig und in dessen Druckaufbauzone dreigängig ausgeführt sind und der Extruder ein Längen/Durchmesserverhältnis kleiner/gleich 40 aufweist.

13. Verfahren nach Anspruch 12, **dadurch gekennzeichnet, dass** das Längen/Durchmesserverhältnis im Bereich von 35 bis 40 liegt.

14. Verfahren nach Anspruch 12 oder 13, **dadurch gekennzeichnet, dass** der Kunststoff gekühlt wird.

15. Verfahren nach Anspruch 14, **dadurch gekennzeichnet, dass** die Wellen im Bereich der Kühlzone dreigängig ausgeführt sind.

16. Verfahren nach einem der Ansprüche 12 bis 15, **dadurch gekennzeichnet, dass** die Entgasung des Kunststoffs als Vorwärtsentgasung oder kombiniert als Vorwärts- und Rückwärtsentgasung durchgeführt wird, wobei die Vorwärtsentgasung mehrstufig erfolgt und flüchtige Bestandteile des Kunststoffs in jeder Entgasungsstufe mittels einer Absaugeinrichtung entfernt werden.

17. Verfahren nach einem der Ansprüche 12 bis 16, **dadurch gekennzeichnet, dass** der Extruder in Förderrichtung drei Entgasungszonen aufweist, wobei an der der ersten Entgasungszone zugeordneten Entgasungsöffnung (5) ein Absolutdruck im Bereich von 0,5 bis 1,5 bar, an der der zweiten Entgasungszone zugeordneten Entgasungsöffnung (9) ein Absolutdruck im Bereich von 0,03 bis 1,9 bar und an der der dritten Entgasungszone zugeordneten Entgasungsöffnung (10) ein Absolutdruck im Bereich von 0,001 bis 0,03 bar erzeugt wird.

18. Verfahren nach einem der Ansprüche 12 bis 17, **dadurch gekennzeichnet, dass** dem Kunststoff ein Schleppmittel zugemischt wird.

19. Verfahren nach den Ansprüchen 18 und 19, **dadurch gekennzeichnet, dass** das Schleppmittel in Förderrichtung zwischen der zweiten und der dritten Entgasungszone zugemischt wird.

20. Verfahren nach Anspruch 18 oder 19, **dadurch gekennzeichnet, dass** als Schleppmittel Stickstoff verwendet wird.

21. Verfahren nach Anspruch 20, **dadurch gekennzeichnet, dass** der Extruder mit einer Drehzahl kleiner/gleich 390 U/min betrieben wird und der zugeführte Stickstoffvolumenstrom 2 bis 10 Nm³/h beträgt.

22. Verfahren nach einem der Ansprüche 12 bis 21, **dadurch gekennzeichnet, dass** sich an die in Förderrichtung letzte Entgasungszone eine Druckaufbauzone anschließt.

## Claims

1. Apparatus for degassing plastic materials, in particular high-molecular polycarbonate solutions, having a double-shaft extruder, which comprises shafts rotating in the same direction and meshing with one another, **characterized in that** the extruder has a length-to-diameter ratio less than/equal to 40, wherein the shafts are designed with a double lead in the degassing zone of the extruder and with a triple lead in the pressure build-up zone of the extruder.

2. Apparatus according to claim 1, **characterized in that** the length-to-diameter ratio is in the region of 35 to 40.

3. Apparatus according to claim 1 or 2, **characterized in that** the extruder further comprises a cooling device defining a cooling zone.

4. Apparatus according to claim 3, **characterized in that** the shafts are designed with a triple lead in the cooling zone.

5. Apparatus according to one of the preceding claims, **characterized in that** kneading elements are disposed immediately downstream of the intake opening (2) of the extruder between the feed elements of the shafts.

6. Apparatus according to one of the preceding claims, **characterized in that** the extruder in feed direction comprises a plurality of degassing zones, to each of which an exhausting device is connected.

7. Apparatus according to one of the preceding claims, **characterized in that** the shafts have a triple-lead profile in the region between two degassing zones.

8. Apparatus according to one of the preceding claims, **characterized in that** the extruder comprises an entraining agent inlet (11) disposed between two degassing zones.

9. Apparatus according to claim 8, **characterized in that** the extruder in feed direction comprises three degassing zones, wherein the entraining agent inlet (11) is disposed between the second and the third degassing zone.

10. Apparatus according to one of the preceding claims, **characterized in that** disposed upstream of the intake opening (2) of the extruder is a vent opening (3) used for backward degassing.

11. Apparatus according to one of the preceding claims, **characterized in that** disposed downstream of the - in feed direction - last degassing zone is a charging device (15) for admixing additives.

12. Process for degassing plastic materials, in particular high-molecular polycarbonate solutions, by means of a double-shaft extruder, which comprises shafts rotating in the same direction and meshing with one another, **characterized in that** the shafts are designed with a double lead in the degassing zone of the extruder and with a triple lead in the pressure build-up zone of the extruder and the extruder has a length-to-diameter ratio smaller than/equal to 40.

13. Process according to claim 12, **characterized in that** the length-to-diameter ratio is in the region of 35 to 40.

14. Process according to claim 12 or 13, **characterized in that** the plastic material is cooled.

15. Process according to claim 14, **characterized in that** the shafts are designed with a triple lead in the region of the cooling zone.

16. Process according to one of claims 12 to 15, **characterized in that** the degassing of the plastic material is effected in the form of forward degassing or a combination of forward and backward degassing, wherein the forward degassing is effected in a plurality of stages and volatile components of the plastic material are removed in each degassing stage by means of an exhausting device.

17. Process according to one of claims 12 to 16, **characterized in that** the extruder in feed direction comprises three degassing zones, wherein there is generated at the vent opening (5) associated with the first degassing zone an absolute pressure in the region of 0.5 to 1.5 bar, at the vent opening (9) associated with the second degassing zone an absolute pressure in the region of 0.03 to 1.9 bar and at the vent opening (10) associated with the third degassing zone an absolute pressure in the region of 0.001 to 0.03 bar.

18. Process according to one of claims 12 to 17, **characterized in that** an entraining agent is admixed with the plastic material.

19. Process according to claims 18 and 19, **characterized in that** the entraining agent is admixed in feed direction between the second and the third degassing zone.

20. Process according to claim 18 or 19, **characterized in that** nitrogen is used as an entraining agent.

21. Process according to claim 20, **characterized in that** the extruder is operated at a rotational speed lower than/equal to 390 rpm and the volume rate of flow of the supplied nitrogen is 2 to 10 Nm³/h.

22. Process according to one of claims 12 to 21, **characterized in that** the - in feed direction - last degassing zone is adjoined by a pressure build-up zone.

## Revendications

1. Dispositif pour le dégazage de matières synthétiques, en particulier de solutions de polycarbonate à haut poids moléculaire, comportant une extrudeuse à double arbre qui présente des arbres qui tournent dans le même sens et qui s'engrènent l'un avec l'autre, **caractérisé en ce que** l'extrudeus présente un rapport longueur/diamètre inférieur ou égal à 40, les arbres étant réalisés à deux volutes dans la zone de dégazage de l'extrudeuse et à trois volutes dans sa zone d'établissement de pression.

2. Dispositif selon la revendication 1, **caractérisé en ce que** le rapport longueur/diamètre est situé dans la plage de 35 à 40.

3. Dispositif selon la revendication 1 ou 2, caractérisé en ce l'extrudeuse présente par ailleurs un dispositif de refroidissement définissant une zone de refroidissement.

4. Dispositif selon la revendication 3, **caractérisé en ce que** les arbres sont réalisés à trois volutes dans la zone de refroidissement.

5. Dispositif selon l'une des revendications précédentes, **caractérisé en ce que** des éléments de pétrissage sont disposés immédiatement en aval de l'ouverture d'introduction (2) dans l'extrudeuse entre les éléments de transport des arbres.

6. Dispositif selon l'une des revendications précédentes, **caractérisé en ce que** l'extrudeus présente dans la direction du transport plusieurs zones de dégazage à chacune desquelles est raccordé un dispositif d'aspiration.

7. Dispositif selon l'une des revendications précédentes, **caractérisé en ce que** les arbres ont un profil à trois volutes entre deux zones de dégazage.

8. Dispositif selon l'une des revendications précédentes, **caractérisé en ce que** l'extrudeuse présente une entrée (11) d'agent d'entraînement disposée entre deux zones de dégazage.

9. Dispositif selon la revendication 8, **caractérisé en ce que** l'extrudeuse présente trois zones de dégazage dans la direction du transport, l'entrée (11) d'agent d'entraînement étant disposée entre la deuxième et la troisième zone de dégazage.

10. Dispositif selon l'une des revendications précédentes, **caractérisé en ce qu'**en avant de l'ouverture d'introduction (2) dans l'extrudeuse est disposée une ouverture de dégazage (3) qui sert de dégazage vers l'arrière.

11. Dispositif selon l'une des revendications précédentes, **caractérisé en ce qu'**en aval de la dernière zone de dégazage dans la direction du transport est disposé un dispositif (15) d'introduction pour l'addition d'additifs.

12. Procédé de dégazage de matières synthétiques, en particulier de solutions de polycarbonate à haut poids moléculaire, au moyen d'une extrudeuse à double arbre qui présente des arbres qui tournent dans le même sens et qui s'engrènent l'un avec l'autre, **caractérisé en ce que** les arbres sont configurés à deux volutes dans la zone de dégazage de l'extrudeuse et à trois volutes dans la zone d'établissement de pression, l'extrudeuse présentant un rapport longueur/diamètre inférieur ou égal à 40.

13. Procédé selon la revendication 12, **caractérisé en ce que** le rapport longueur/diamètre est situé dans la plage de 35 à 40.

14. Procédé selon la revendication 12 ou 13, **caractérisé en ce que** la matière synthétique est refroidie.

15. Procédé selon la revendication 14, **caractérisé en ce que** dans la région de la zone de refroidissement, les arbres sont configurés à trois volutes.

16. Procédé selon l'une des revendications 12 à 15, **caractérisé en ce que** le dégazage de la matière synthétique est réalisé comme dégazage vers l'avant ou comme combinaison d'un dégazage vers l'avant et d'un dégazage vers l'arrière, le dégazage vers l'avant s'effectuant en plusieurs étapes et les composants volatils de la matière synthétique étant extraits dans chaque étage de dégazage au moyen d'un dispositif d'aspiration.

17. Procédé selon l'une des revendications 12 à 16, **caractérisé en ce que** l'extrudeus présente trois zones de dégazage dans la direction du transport, une pression absolue comprise dans la plage de 0,5 à 1,5 bar étant créée à à l'ouverture de dégazage (5) associée à la première zone de dégazage, une pression absolue comprise dans la plage de 0,03 à 1,9 bar à l'ouverture de dégazage (9) associée à la deuxième zone de dégazage et une pression absolue comprise dans la plage de 0,001 à 0,03 bar à l'ouverture de dégazage (10) associée à la troisième zone de dégazage.

18. Procédé selon l'une des revendications 12 à 17, **caractérisé en ce qu'**un agent d'entraînement est ajouté à la matière synthétique.

19. Procédé selon les revendications 18 et 19, **caractérisé en ce qu'**un agent d'entraînement est ajouté dans la direction du transport entre la deuxième et la troisième zones de dégazage.

20. Procédé selon la revendication 18 ou 19, **caractérisé en ce que** l'on utilise de l'azote comme agent d'entraînement.

21. Procédé selon la revendication 20, **caractérisé en ce que** l'extrudeuse est utilisée à une vitesse de rotation inférieure ou égale à 390 Tours/min, le débit d'azote apporté étant de 2 à 10 Nm³/h.

22. Procédé selon l'une des revendications 12 à 21, **caractérisé en ce qu'**une zone d'établissement de pression se raccorde à la dernière zone de dégazage dans la direction du transport.
